# EUROPEAN PATENT APPLICATION

(11) **EP 1 864 654 A1**
(43) Date of publication of application: **12.12.2007**
(21) Application number: 07017082.4
(22) Date of filing: 05.06.2003
(51) Int. Cl.: A61K 31/045, A61K 31/07, A61K 31/05, A23L 1/29, A23L 1/30, A23L 1/302, A23L 1/303, A23L 1/304

(54) **Infant formula compositions containing lutein and zeaxanthin**

(30) Priority: 06.06.2002 US 386351 P
(62) Divisional of application: 03757333.4
(71) Applicant: Wyeth, Madison, NJ 07940 (US)
(72) Inventor: Zimmer, John Paul, Collegeville PA 19426 (US)
(74) Representative: Connelly, Michael John

(57) **Abstract**

Infant formula compositions are provided which comprise lutein and zeaxanthin.

## Description

### Field of the Invention

This invention relates to infant formula compositions containing -lutein and zeaxanthin and the use of such compositions as a source of nutrition for infants.

### Background of the Invention

Lutein and zeaxanthin are naturally occurring xanthophylls (plant pigments that are a sub-class of carotenoids) found in commonly consumed foods such as spinach, kale, corn and oranges. Humans cannot synthesize lutein or zeaxanthin, therefore, the only source of lutein and zeaxanthin in the human body is from the diet. Unlike beta-carotene, lutein and zeaxanthin cannot be converted into vitamin A. Lutein and zeaxanthin have similar chemical structures and can only be distinguished from one another using specialized analytical methods. The compounds can be referred to collectively as "lutein + zeaxanthin" to reflect that the compounds were not separated during chemical analysis.

Lutein and zeaxanthin are the only common dietary carotenoids found in the retina of the human eye. The mechanism of selective accumulation of lutein and zeaxanthin in the eye is currently poorly understood. However, the fact that lutein and zeaxanthin are accumulated in the human eye indicates that they may perform a biological function. Lutein and zeaxanthin may protect the retina from damage by acting as antioxidants or filtering out damaging wavelengths of blue light. In addition, lutein and zeaxanthin may improve visual acuity by filtering out blue light that is not fully focused by the lens (Hammond, et al, Arch Biochem Biophys (2001), 385, p. 41-46). These properties may be especially important for the young infant because infant visual acuity develops slowly during the first months of life (McCulloch, Opthal Physiol Opt (1998), 18. p. 140-146) and their eyes do not filter out harmful light as well as adults (Gaillard, et al, IOVS (2000), 41, p. 1454-1459).

Although the compounds lutein and zeaxanthin are well-known, very little information is available about lutein and zeaxanthin in relation to the diet of human infants. Several studies have measured the amount of lutein and/or zeaxanthin in cord blood (Kiely et al., Eur J Clin Nutr (1999), 53, p. 711-715; Oostenbrug et al., Br J Nutr (1998), 80, p. 67-73; Oostenbrug et al., Eur J Clin Nutr (1998). 52, p. 754-759; Yeum et al., J Am Coll Nutr (1998), 17, p. 442-447). However, these findings relate to lutein and zeaxanthin derived from the mother's blood and not from the infant's own dietary sources. One review included preliminary data on plasma lutein levels in nine breastfed infants (Jewell et al., Proc Nutr Soc (2001), 60, p.171-178) and an abstract by the same authors (Jewell, et al, Proc Nutr Soc (2001), 60, OCB) followed up plasma lutein and zeaxanthin in a group of preterm infants for up to five weeks. These investigations found that there is a high correlation between lutein and zeaxanthin concentrations in the plasma of mothers and their breast fed infants. However, the authors did not compare plasma levels of lutein or zeaxanthin in formula-fed versus breastfed infants. Another paper compared plasma levels of some carotenoids in breast-fed versus formula fed infants, but plasma levels of lutein or zeaxanthin were not reported (Sommerburg et al., Eur. J. Pediatr. (2000) 159: 86-90).

A poster entitled "Contribution of Beta Carotene (βC) from βC Enriched Formulae to individual and Total Serum Carotenoids in Term Infants" presented at the Society for Pediatric Research meeting at Seattle, Washington, USA, in May of 1994, compared plasma concentrations of carotenoids in full term formula-fed versus breast-fed infants. The findings demonstrated that in formula-fed infants, serum carotenoid levels (including lutein levels) are lower in comparison to breast-fed infants.

Chemical analyses of lutein and zeaxanthin in post-mortem infant eyes have been reported in three studies, although none of these studies has differentiated between breastfed and formula-fed infants. Handelman et al., (IOVS (1988), 29, p. 850-855) reported retina lutein and zeaxanthin levels for two infants while Bone, et al, reported lutein and zeaxanthin levels for five infants in one study (Bone et al., Exp. Eye Res. (1997) 64, 211-218) and four infants in another (Bone et al., IOVS (1988), 29, p. 843-849). In general, infants had lower total retina concentrations of lutein and zeaxanthin than children or adults, but the ratio of lutein to zeaxanthin was much higher in infants compared to adults. Thus, infants are distinct from older children and adults with respect to lutein and zeaxanthin in the eye.

Several studies have measured the combined lutein + zeaxanthin content of human milk samples. See, e.g.. Canfield et al., Eur, J. Nutr., 40:30-38 (2001); Schweigert et al., Int. J. Vitam. Nutr. Res., 70(3) p. 79-83 (2000); Canfield et al., Am. J. Clin. Nutr., 67:276-283 (1998); Canfield et al., Anal. Chem. 69, p. 1873-1881 (1997); Giuliano et al., Methods In Immunology, Vol. 213 p. 381-399 (1992); and Patton et al., LIPIDS, Vol. 25, No. 3, p. 159-165 (1990). One study has separately reported lutein versus zeaxanthin levels in human milk (Khachik et al. Anal. Chem. (1997), 69. 1873-1881). Thus, human breast milk contains lutein and zeaxanthin. However, lutein and zeaxanthin are not currently added to any infant formula.

Formulations containing carotenoids, such as lutein and zeaxanthin, among other ingredients, are known. U.S. Patent No. 6,261,598 discloses carotenoid formulations containing B-carotene, lycopene and lutein and the use thereof in human foods.

WO 200137781 discloses aqueous dispersions of nutrients selected from (a) an isoflavone, (b) lycopene, (c) lutein and (d) a co-enzyme for use in beverages and cosmetics.

EP774251 discloses the use of the 3R-3'R stereoisomer of zeaxanthin in the manufacture of medicaments as nutritional supplements for the treatment or prophylaxis of macular degeneration in humans.

EP1155620 discloses nutritional compositions for dietary supplements comprising a mineral portion, at least 40% fish oil and a vitamin portion including a selection of vitamins and derivatives thereof selected from beta carotene, B-complex vitamins, Vitamin C. Vitamin D, Vitamin E, folic acid and biotin.

However, the use of lutein and zeaxanthin in infant formula compositions has heretofore not been described. Accordingly, there is a need for such a formulation.

### Summary of the Invention

The present invention is related to an infant formula composition comprising lutein and zeaxanthin. The invention is further directed to a method for feeding an infant comprising administering to the infant a composition comprising lutein and zeaxanthin.

### Detailed Description of the Invention

The lutein and zeaxanthin components useful in the present formula may be in the form of free xanthophylls, xanthopyll esters or other chemical forms of lutein or zeaxanthinand may be prepared by any one or more of various methods recognized by those skilled in the art. For example, lutein and zeaxanthin may be obtained by extraction from marigolds or other xanthophylls-rich sources, chemical synthesis, fermentation or other biotechnology-derived and enriched xanthophyll sources. A suitable form of lutein and zeaxanthin useful in the present invention is available commercially as "Lutein 5% TG" from Roche Vitamins, Inc., (Parsippany. NJ).

The infant formula composition of the present invention may comprise lutein and zeaxanthin in an amount of about 6 to about 230 mcg/Liter. Preferably the present infant formula compositions contain about 15 to about 44 mcg/Liter, more preferably about 20 to about 30 mcg, liter and most preferably, about 25 mcg/Liter of lutein and zeaxanthin. The amounts of lutein and zeaxanthin disclosed herein refer to the combined amount of the compounds lutein and zeaxanthin and not these compounds individually. Therefore, as long as the formulations contain the total amount of lutein and zeaxanthin set forth herein, the amounts of the individual components is not critical.

The use of lutein and zeaxanthin in the present amounts closely resembles the amounts of such compounds found in human breast milk on a worldwide basis. As reported at the 2000 International Society for Research on Human Milk and Lactation Meeting, one study analyzed the total lutein and zeaxanthin content of human milk samples from 450 women from nine countries. The lowest individual concentration of lutein and zeaxanthin observed was 6 mcg/Liter and the highest concentration was 230 mcg/Liter

The following table sets forth the average concentration of lutein and zeaxanthin in milk samples from each of the nine countries.

| Country | Lutein and Zeaxanthin (mcg/L) |
|---|---|
| Australia | 15-36 ± 1.14 |
| Canada | 17.07 ± 1.14 |
| Chile | 32.43 ± 2.84 |
| China | 43.23 ± 4.55 |
| Japan | 43.80 ± 2.27 |
| Mexico | 25.03 ± 1.71 |
| Philippines | 19.91 ± 1.71 |
| United Kingdom | 15.36 ± 1.14 |
| United States | 25.12 ± 1.14 |

The infant formula compositions of the present invention may be prepared by utilizing conventional bovine milk and protein based formulas such as S-26 or soy protein based formulas such as Nursoy available from Wyeth Nutrition.

The infant formula compositions of the invention may also contain vitamins and minerals considered to be essential in the daily diet. These vitamins and minerals should be present in the infant formula compositions in nutritionally significant amounts. Examples of suitable vitamins and minerals include vitamin A. vitamin B complex, vitamin C, vitamin D, vitamin E, vitamin K, calcium, magnesium, sodium, potassium, phosphorous, copper, zinc, iodine, selenium, iron, niacin, folic acid, pantothenic add, biotin, choline, inositol and manganese.

The infant formula compositions may further comprise one or more lipid sources as will be recognized by those skilled in the art. Furthermore, the present compositions may contain additional materials shown to have beneficial effects, such as nucleotides, immunoglobulins, and polyunsaturated fatty acids.

The present invention will now be described with references to the following examples.

### Example 1

An exemplary infant formula composition according to the present invention is as follows:

| Component | Units | Quantity per Reconstituted Liter |
|---|---|---|
| Energy | Kcal | 672 |
| Protein | g | 15 |
| Carbohydrate | g | 73 |
| Fat* | g | 36 |
| Vitamin A | IU | 2500 |
| Beta-Carotene | IU | 400 |
| Lutein + Zeaxanthin | mcg | 25 |
| Vitamin D | IU | 425 |
| Vitamin E | IU | 11 |
| Vitamin K | mcg | 67 |
| Vitamin B₁ | mcg | 1000 |
| Vitamin B₂ | mcg | 1500 |
| Vitamin B₆ | mcg | 600 |
| Vitamin B₁₂ | mcg | 2 |
| Niacin | mcg | 5000 |
| Folic ACid | mcg | 80 |
| Pantothenic Acid | mcg | 3000 |
| Biotin | mcg | 20 |
| Vitamin C | mg | 90 |
| Choline | mg | 100 |
| inositol | mg | 33 |
| Calcium | mg | 460 |
| Phosphorous | mg | 333 |
| Magnesium | mg | 64 |
| Iron | mg | 8 |
| Zinc | mg | 6 |
| Manganese | mcg | 50 |
| Copper | mcg | 560 |
| Iodine | mcg | 100 |
| Sodium | mg | 160 |
| Potassium | mg | 700 |
| Chloride | mg | 433 |
| Selenium | mcg | 14 |

| Nucleotides: | | |
|---|---|---|
| CMP | mg | 16.5 |
| UMP | mg | 5.0 |
| AMP | mg | 4.0 |
| GMP | mg | 2.0 |
| IMP | mg | 2.0 |

The fat blend of the formula is as follows:

| **OILS** | **% OF TOTAL BLEND** |
|---|---|
| Palm olein | 31.7 |
| Oleic (Safflower) | 23.4 |
| Coconut | 22.8 |
| Soy | 18.8 |
| Lecithin | 0.98 |
| Monoglyceride | 1.00 |
| Arachidonic Acid | 0.34 |
| Docosahexanoic Acid | 0.21 |

The formula of Example 1 was prepared by blending 4500mg of lutein and zeaxanthin (Lutein 5% TG available from Roche Vitamins) with the fat soluble vitamins of the formulation. This blend was then added to the fat blend to obtain a final concentration of lutein and zeaxanthin of 225mg per kg of finished formula powder. The remainder of the ingredients were blended and the final mix was dried to obtain a powder.

The present invention may be embodied in other specific forms without departure from the present as essential attributes thereof and, accordingly, reference should be made to the approval and claims rather than to the foregoing specification as indicating the scope of the invention.

## Claims

1. An infant formula composition in liquid form comprising lutein and zeaxanthin in an amount of 6 to 230 mcg/L.

2. An infant formula composition as in Claim 1 comprising lutein and zeaxanthin in an amount of 15 to 44 mcg/L.

3. An infant formula composition as in Claim 2 comprising lutein and zeaxanthin in an amount of 20 to 30 mcg/L.

4. An infant formula composition as in Claim 3 comprising 25 mcg/L of lutein and zeaxanthin.

5. An infant formula composition in the form of a dry powder, wherein said composition may be reconstituted by adding water to produce a composition of Claim 1.

6. An infant formula composition as in Claim 1, further comprising at least one of Vitamin A, Vitamin D, Vitamin E and Vitamin B complex.

7. An infant formula composition as in Claim 1, further comprising at least one of calcium, magnesium, sodium, potassium, phosphorous, copper, zinc, iodine, selenium and iron.

8. A method of feeding an infant comprising administering to said infant a nutritionally sufficient amount of the formula of Claim 1.
